# EUROPÄISCHE PATENTSCHRIFT

(11) **EP 2 529 458 B1**
(45) Veröffentlichungstag und Bekanntmachung des Hinweises auf die Patenterteilung: **13.09.2017**
(21) Anmeldenummer: 10705097.3
(22) Anmeldetag: 29.01.2010
(51) Int. Cl.: H02H 1/00, H02J 13/00

(54) **ANORDNUNG ZUM SCHÜTZEN, STEUERN UND/ODER ÜBERWACHEN EINER ELEKTRISCHEN SCHALT- ODER ENERGIEVERSORGUNGSANLAGE**
ARRANGEMENT FOR PROTECTING, CONTROLLING AND/OR MONITORING AN ELECTRICAL SWITCHGEAR OR ENERGY SUPPLY SYSTEM
ENSEMBLE POUR PROTÉGER, COMMANDER ET/OU SURVEILLER UNE INSTALLATION DE DISTRIBUTION ÉLECTRIQUE OU D'APPROVISIONNEMENT EN ÉNERGIE ÉLECTRIQUE

(43) Veröffentlichungstag der Anmeldung: 05.12.2012
(73) Patentinhaber: Siemens Aktiengesellschaft, 80333 München (DE)
(72) Erfinder: DAWIDCZAK, Henry, 91580 Patersaurach (DE); DUFAURE, Thierry, 12053 Berlin (DE)
(86) Internationale Anmeldenummer: PCT/EP2010/000692
(87) Internationale Veröffentlichungsnummer: WO 2011/091820

(56) Entgegenhaltungen:
- EP-A1- 1 096 348
- WO-A1-2008/037235
- WO-A1-2010/077588
- US-A1- 2002 046 263
- DROMS R: "DYNAMIC HOST CONFIGURATION PROTOCOL" DYNAMIC HOST CONFIGURATION PROTOCOL. NETWORK WORKING GROUP, XX, XX, 1. März 1997 (1997-03-01), XP002149764

## Beschreibung

Die Erfindung bezieht sich auf ein Verfahren zum Betreiben einer Anordnung, die zum Schützen, Steuern und/oder Überwachen einer elektrischen Schalt- oder Energieversorgungsanlage geeignet ist. Eine solche Anordnung umfasst eine zentrale Steuereinrichtung, zumindest ein Endgerät, das zum Messen von Energie, Schalten von Energie und/oder Übertragen von Zustandsdaten einer an das Endgerät angeschlossenen Energiequelle oder eines an das Endgerät angeschlossenen Energieverbrauchers geeignet ist, sowie ein Kommunikationsnetz.

Um eine funktionsbezogene Kommunikation - also eine Kommunikation, die die individuellen Geräteeigenschaften der Endgeräte berücksichtigt - zwischen der zentralen Steuereinrichtung und den Endgeräten über das Kommunikationsnetz zu ermöglichen, müssen die Endgeräte der zentralen Steuereinrichtung bekannt sein, und die zentrale Steuereinrichtung muss darüber hinaus wissen, welche individuellen Geräteeigenschaften die jeweiligen Endgeräte aufweisen. Wird nun die Anordnung verändert, indem beispielsweise ein neues Endgerät über das Kommunikationsnetz an die zentrale Steuereinrichtung angeschlossen wird, muss eine entsprechende Gerätetypbeschreibung für das neu angeschlossene Endgerät der zentralen Steuereinrichtung bekannt gemacht werden.

Das Dokument US 2002/0046263 A1 offenbart eine Methode zur schnellen Konfiguration eines Automatisierungsmoduls welches mit einem TCP/IP Netzwerk verbunden ist.

Der Erfindung liegt die Aufgabe zugrunde, ein Verfahren zum Betreiben einer Anordnung anzugeben, das eine Inbetriebnahme bzw. einen Weiterbetrieb der Anordnung nach einer Umkonfiguration, insbesondere nach einem Hinzuschalten eines neuen Endgeräts, mit geringem Aufwand, insbesondere ohne den Eingriff von Servicetechnikern ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass nach dem Anschließen eines Endgeräts an das Kommunikationsnetz die zentrale Steuereinrichtung dem Endgerät Netzwerkkonfigurationsdaten zuweist, das Endgerät seine Typkennung unter Verwendung der zugewiesenen Netzwerkkonfigurationsdaten an die zentrale Steuereinrichtung sendet und die funktionsbezogene Kommunikation zwischen dem Endgerät und der zentralen Steuereinrichtung unter Heranziehung einer der Typkennung entsprechenden Gerätetypbeschreibung betrieben wird.

Ein wesentlicher Vorteil des erfindungsgemäßen Verfahrens ist darin zu sehen, dass bei diesem kein Eingriff von Servicepersonal nach einem Anschließen eines neuen Endgeräts an die zentrale Steuereinrichtung erforderlich ist; denn nach dem Anschließen des Endgeräts an das Kommunikationsnetz weist die zentrale Steuereinrichtung dem Endgerät erfindungsgemäß Netzwerkkonfigurationsdaten zu, und das neu angeschlossene Endgerät sendet erfindungsgemäß seine Typkennung an die zentrale Steuereinrichtung. Ab diesem Zeitpunkt weiß die zentrale Steuereinrichtung somit, wie die Anordnung verändert wurde und wie sie zukünftig weiter betrieben werden muss.

Gemäß einer besonders bevorzugten Ausgestaltung des Verfahrens ist vorgesehen, dass die zentrale Steuereinrichtung unter Heranziehung der empfangenen Typkennung aus einer Typendatenbank eine die Funktion des Endgeräts beschreibende Gerätetypbeschreibung für das Endgerät ausliest und die funktionsbezogene Kommunikation zwischen dem Endgerät und der zentralen Steuereinrichtung unter Heranziehung der ausgelesenen Gerätetypbeschreibung betrieben wird.

Alternativ oder zusätzlich kann vorsehen werden, dass das Endgerät sowohl seine Typkennung und als auch eine seine Funktion beschreibende Gerätetypbeschreibung an die zentrale Steuereinrichtung sendet und die funktionsbezogene Kommunikation zwischen dem Endgerät und der zentralen Steuereinrichtung unter Heranziehung der gesendeten bzw. empfangenen Gerätetypbeschreibung betrieben wird.

Besonders bevorzugt erfolgt die automatische Zuweisung der Netzwerkkonfigurationsdaten durch die zentrale Steuereinrichtung gemäß dem DHCP-Protokoll (DHCP: Dynamic Host Configuration Protocol = Dynamisches Gastgeberkonfigurationsprotokoll).

Die automatische Zuweisung erfolgt vorzugsweise, nachdem die zentrale Steuereinrichtung von dem Endgerät eine Anfrage auf Zuteilung von Netzwerkkonfigurationsdaten erhalten hat. Eine solche Anfrage auf Zuteilung von Netzwerkkonfigurationsdaten kann beispielsweise durch eine "DHCPDISCOVER"-Nachricht gemäß DHCP-Protokoll erfolgen. Hierbei sendet das Endgerät seine Typkennung vorzugsweise an alle an das Kommunikationsnetz angeschlossenen Geräte unter Verwendung einer Multicast-Adresse, beispielsweise in Form einer Nachricht mit Absender-IP-Adresse 0.0.0.0, Zieladresse 255.255.255.255, UDP-Quellport 68 und UDP-Zielport 67.

Nach dem Empfang der Netzwerkkonfigurationsdaten sendet das Endgerät seine Typkennung vorzugsweise ebenfalls an alle an das Kommunikationsnetz angeschlossenen Geräte, beispielsweise unter Verwendung einer Multicast-Adresse. Durch das Senden der Typkennung an alle Geräte lässt sich in einfacher Weise erreichen, dass alle Geräte über die Konfiguration der gesamten Anordnung informiert sind und ihre Arbeitsweise entsprechend anpassen können.

Für das Senden seiner Typkennung wird das Endgerät vorzugsweise das LLDP-Protokoll (LLDP: Link Layer Discovery Protocol = Verbindungsschichtentdeckungsprotokoll) verwenden. Das LLDP-Protokoll ist ein herstellerunabhängiges Schicht-2-Protokoll nach der IEEE-802.1-Norm.

Die zentrale Steuereinrichtung liest die Gerätetypbeschreibung vorzugsweise aus einer zentralen Typendatenbank aus. Eine zentrale Typendatenbank bietet den Vorteil, dass diese einfach aktualisiert werden kann, so dass neue Endgeräte und/oder Veränderungen existierender Geräte ohne großen Aufwand in das System eingepflegt werden können.

Alternativ oder zusätzlich kann die zentrale Steuereinrichtung die Gerätetypbeschreibung aus einer endgeräteeigenen Typendatenbank und damit aus dem Endgerät selbst auslesen. Diese Vorgehensweise ist insbesondere dann vorteilhaft, wenn - aus welchen Gründen auch immer - eine zentrale Typendatenbank nicht zur Verfügung steht oder beispielsweise temporär nicht auslesbar ist.

Dem Endgerät kann außerdem ein geräteindividueller Erweiterungsdatensatz zugeordnet sein, der eine oder mehrere zusätzliche Funktionen des Endgeräts beschreibt, die nicht oder nicht vollständig in der Gerätetypbeschreibung definiert sind. In einem solchen Fall wird der geräteindividuelle Erweiterungsdatensatz vorzugsweise von der zentralen Steuereinrichtung aus dem Endgerät ausgelesen.

Nach dem Auslesen eines geräteindividuellen Erweiterungsdatensatzes ist die zentrale Steuereinrichtung vorzugsweise geeignet, eine oder mehrere in dem geräteindividuellen Erweiterungsdatensatz beschriebene Funktionen des Endgeräts zu aktivieren und zu handhaben.

Als vorteilhaft wird es außerdem angesehen, wenn die Anordnung mit einer die Konfiguration der Anordnung beschreibenden Systemkonfigurationsdatei betrieben wird und nach dem Anschließen eines neuen Endgeräts an das Kommunikationsnetz eine neue Systemkonfigurationsdatei, die die alte Systemkonfigurationsdatei ersetzt und die Eigenschaften des neu angeschlossenen Endgeräts berücksichtigt, unter Heranziehung der Gerätetypbeschreibung des neuen Endgeräts gebildet wird.

Mit einer Systemkonfigurationsdatei gemäß dem IEC61850-Standard lässt sich die Anordnung besonders einfach betreiben. Demgemäß wird es als vorteilhaft angesehen, wenn die alte und die neue Systemkonfigurationsdatei SCD-Dateien nach dem IEC61850-Standard sind. Die Gerätetypbeschreibung des Endgeräts ist vorzugsweise in einer ICD-Datei nach dem IEC61850-Standard enthalten.

Die zentrale Steuereinrichtung kann beispielsweise eine an das Endgerät angeschlossene Energiequelle oder einen an das Endgerät angeschlossenen Energieverbraucher schützen, steuern und/oder überwachen.

Die Erfindung bezieht sich außerdem auf eine Anordnung gemäß Anspruch 13 zum Schützen, Steuern, Regeln und/oder Überwachen einer elektrischen Schalt- oder Energieversorgungsanlage.

Erfindungsgemäß ist bei einer solchen Anordnung vorgesehen, dass eine zentrale Steuereinrichtung geeignet ist, nach dem Anschließen eines Endgeräts an das Kommunikationsnetz dem Endgerät Netzwerkkonfigurationsdaten zuzuweisen, das Endgerät geeignet ist, seine Typkennung unter Verwendung der zugewiesenen Netzwerkkonfigurationsdaten an die zentrale Steuereinrichtung zu senden, und die zentrale Steuereinrichtung außerdem geeignet ist, die funktionsbezogene Kommunikation mit dem Endgerät unter Heranziehung einer der Typkennung entsprechenden Gerätetypbeschreibung zu betreiben.

Bezüglich der Vorteile der erfindungsgemäßen Anordnung sei auf die oben erläuterten Vorteile des erfindungsgemäßen Verfahrens verwiesen, da die Vorteile des erfindungsgemäßen Verfahrens denen der erfindungsgemäßen Anordnung im Wesentlichen entsprechen.

Gemäß einer besonders bevorzugten Ausgestaltung der Anordnung ist vorgesehen, dass die zentrale Steuereinrichtung zum Schützen, Steuern und/oder Überwachen einer an das Endgerät angeschlossenen Energiequelle oder eines an das Endgerät angeschlossenen Energieverbrauchers geeignet ist. Außerdem ist die zentrale Steuereinrichtung vorzugsweise geeignet, unter Heranziehung der empfangenen Typkennung aus einer Typendatenbank eine die Funktion des Endgeräts beschreibende Gerätetypbeschreibung für das Endgerät auszulesen und die funktionsbezogene Kommunikation mit dem Endgerät unter Heranziehung der ausgelesenen Gerätetypbeschreibung zu beginnen bzw. durchzuführen.

Das Endgerät ist vorzugsweise zum Messen von Energie, Schalten von Energie und/oder Übertragen von Zustandsdaten einer an das Endgerät angeschlossenen Energiequelle oder eines an das Endgerät angeschlossenen Energieverbrauchers geeignet. Außerdem ist es vorzugsweise geeignet, seine Typkennung an alle an das Kommunikationsnetz angeschlossenen Geräte zu senden.

Die Erfindung bezieht sich außerdem auf eine zentrale Steuereinrichtung gemäß Anspruch 14, die dazu eingerichtet ist, in einer Anordnung nach Anspruch 13 betrieben zu werden.

Die Erfindung bezieht sich außerdem auf ein Endgerät gemäß Anspruch 15, das dazu eingerichtet ist, in einer Anordnung nach Anspruch 13 betrieben zu werden.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung, bei der an eine zentrale Steuereinrichtung über ein Kommunikationsnetz drei Endgeräte angeschlossen sind,
- Figuren 2-3: beispielhaft die Arbeitsweise der Anordnung gemäß Figur 1, nachdem ein viertes Endgerät an das Kommunikationsnetz angeschlossen worden ist, anhand der Figuren 1-3 wird auch das erfindungsgemäße Verfahren beispielhaft erläutert, und
- Figur 4: ein weiteres Ausführungsbeispiel für eine erfindungsgemäße Anordnung, anhand derer eine andere Ausführungsform des erfinderischen Verfahrens beispielhaft erläutert wird.

In den Figuren werden der Übersicht halber für identische oder vergleichbare Komponenten stets dieselben Bezugszeichen verwendet.

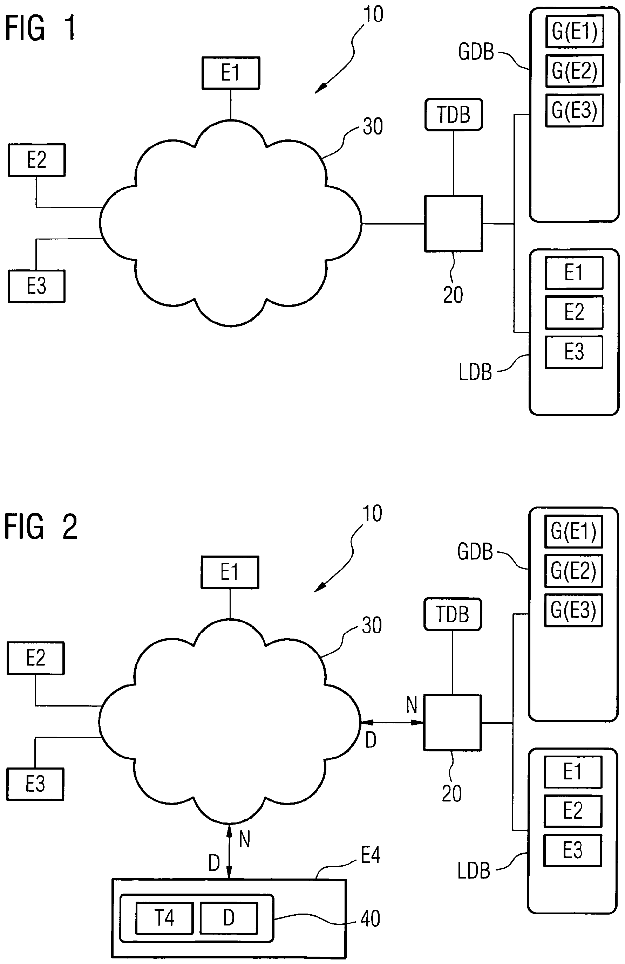

In der Figur 1 erkennt man eine Anordnung 10 mit einer zentralen Steuereinrichtung 20, die an ein Kommunikationsnetz 30 angeschlossen ist. Mit dem Kommunikationsnetz 30 stehen darüber hinaus drei Endgeräte E1, E2 und E3 in Verbindung, die über das Kommunikationsnetz 30 mit der zentralen Steuereinrichtung 20 kommunizieren können. Bei dem Kommunikationsnetz 30 kann es sich beispielsweise um ein Internet-basiertes Kommunikationsnetz handeln, also ein Kommunikationsnetz, das nach dem Internet-Protokoll arbeitet.

Die zentrale Steuereinrichtung 20 steht darüber hinaus mit einer Typendatenbank TDB in Verbindung, in der für eine Vielzahl unterschiedlicher Gerätetypen jeweils eine Gerätetypbeschreibung hinterlegt ist, die die jeweilige Arbeitsweise des erfassten Gerätetyps beschreibt.

Darüber hinaus steht die zentrale Steuereinrichtung 20 mit einer Gerätedatenbank GDB in Verbindung, in der alle diejenigen Geräte abgespeichert sind, die über das Kommunikationsnetz 30 mit der zentralen Steuereinrichtung 20 in Verbindung stehen. Bei dem Ausführungsbeispiel gemäß Figur 1 sind in der Gerätedatenbank GDB Datensätze gespeichert, die die an das Kommunikationsnetz 30 angeschlossenen Endgeräte E1, E2 und E3 identifizieren und beschreiben. Beispielsweise enthalten die Datensätze jeweils Gerätetypbeschreibungen G(E1), G(E2) und G(E3), die aus der Typendatenbank TDB für die drei Endgeräte E1, E2 und E3 ausgelesen worden sind.

Durch Zugriff auf die Gerätedatenbank GDB ist es der zentralen Steuereinrichtung 20 möglich, mit jedem der angeschlossenen Endgeräte E1, E2 und E3 funktionsbezogen zu kommunizieren. Unter einer funktionsbezogenen Kommunikation wird dabei verstanden, dass die zentrale Steuereinrichtung 20 mit jedem der Endgeräte E1, E2 und E3 jeweils unter Bezugnahme auf die jeweiligen individuellen Gerätefunktionen kommuniziert: Handelt es sich bei einem Endgerät beispielsweise um ein Messgerät, so wird die zentrale Steuereinrichtung 20 unter Verwendung der in der Gerätedatenbank GDB gespeicherten Gerätetypbeschreibung beispielsweise Messdaten auslesen und entsprechende Messdatenabfragebefehle an das Messgerät senden. Handelt es sich bei einem Endgerät um ein Steuergerät oder einen Schalter, das bzw. der durch Steuerbefehle gesteuert oder geschaltet wird, so wird die zentrale Steuereinrichtung 20 unter Bezugnahme auf die jeweilige Gerätetypbeschreibung, die in der Gerätedatenbank GDB hinterlegt ist, geeignete Steuerbefehle erzeugen und über das Kommunikationsnetz 30 zu dem Steuergerät bzw. Schalter übersenden.

In der Figur 1 ist darüber hinaus eine Laufzeitdatenbank LDB erkennbar, die an die zentrale Steuereinrichtung 20 angeschlossen ist. In der Laufzeitdatenbank LDB speichert die zentrale Steuereinrichtung 20 beispielsweise ab, in welcher Reihenfolge die einzelnen Endgeräte E1, E2 und E3 zwecks Kommunikation angesprochen werden sollen.

Die Figur 2 zeigt beispielhaft die Anordnung 10 gemäß Figur 1, nachdem ein neues Endgerät E4 an das Kommunikationsnetz 30 angeschlossen worden ist. Um eine automatische Umkonfiguration der Anordnung 10 ohne Eingriff von Servicepersonal zu ermöglichen, wird die Anordnung 10 vorzugsweise wie folgt betrieben:

Das Endgerät E4 erzeugt nach einem Anschließen an das Kommunikationsnetz 30 vorzugsweise automatisch eine DHCPDISCOVER-Nachricht N und sendet diese über das Kommunikationsnetz 30 unter anderem an die zentrale Steuereinrichtung 20. Die Nachricht N wird nach dem DHCP-Protokoll erzeugt, um die zentrale Steuereinrichtung 20 aufzufordern, dem neu angeschlossenen Endgerät E4 Netzwerkkonfigurationsdaten zu übermitteln, auf deren Basis eine zukünftige Kommunikation erfolgen soll.

Die zentrale Steuereinrichtung 20 empfängt die Nachricht N und erzeugt anfragegemäß Netzwerkkonfigurationsdaten für die zukünftige Kommunikation über das Kommunikationsnetz 30. Die Netzwerkkonfigurationsdaten werden in Form eines Netzwerkkonfigurationsdatensatzes D über das Kommunikationsnetz 30 zu dem Endgerät E4 übertragen. Der Netzwerkkonfigurationsdatensatz D umfasst beispielsweise eine IP (IP: Internet Protokoll)-Adresse, die das Endgerät E4 zukünftig für die Kommunikation nach dem Internet-Protokoll über das Kommunikationsnetz 30 verwenden soll.

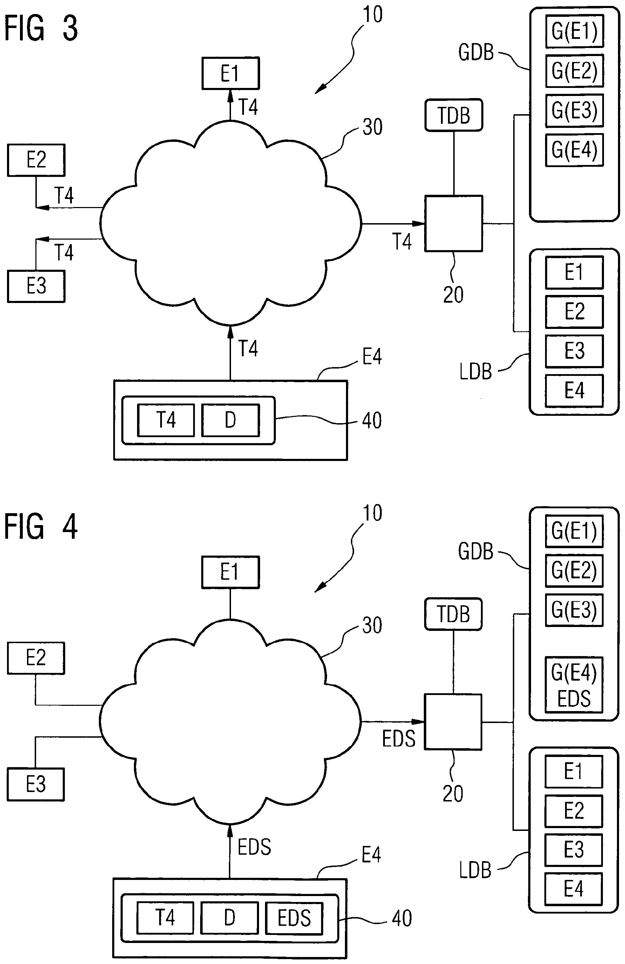

Nachdem das Endgerät E4 den Netzwerkkonfigurationsdatensatz D mit der zu verwendenden IP-Adresse erhalten hat, sendet das Endgerät E4 eine Typkennung T4, die in dem Speicher 40 des Endgeräts E4 gespeichert ist, über das Kommunikationsnetz 30 zu allen an das Kommunikationsnetz 30 angeschlossenen Geräten, also zu den Endgeräten E1, E2 und E3 sowie zu der zentralen Steuereinrichtung 20. Dies zeigt beispielhaft die Figur 3.

Mit dem Empfang der Typkennung T4 ist die zentrale Steuereinrichtung 20 in der Lage, aus der Typendatenbank TDB eine dem Endgerät E4 entsprechende Gerätetypbeschreibung G(E4) auszulesen und in der Gerätedatenbank GDB abzuspeichern. Auch kann das Endgerät E4 nun in der Laufzeitdatenbank LDB berücksichtigt werden. Die Gerätetypbeschreibung G(E4) ergänzt in der Gerätedatenbank GDB nun die Gerätetypbeschreibungen G(E1), G(E2) und G(E3) der drei bereits zuvor angeschlossenen Endgeräte E1, E2 und E3.

Die Änderung in der Gerätedatenbank GDB sowie in der Laufzeitdatenbank LDB ist ebenfalls schematisch in der Figur 3 dargestellt. Es lässt sich erkennen, dass die beiden Datenbanken GDB und LDB durch Aufnahme des Endgerätes E4 entsprechend ergänzt worden sind.

Mit der Aufnahme des Endgerätes E4 in der Gerätedatenbank GDB und in der Laufzeitdatenbank LDB ist die Steuereinrichtung 20 nun in der Lage, eine geräteindividuelle bzw. gerätefunktionsbezogene Kommunikation auch mit dem Endgerät E4 durchzuführen und dieses entsprechend der zu dem Endgerät E4 passenden Gerätetypbeschreibung G(E4)) zu betreiben.

Die Figur 4 zeigt ein Ausführungsbeispiel für eine Anordnung 10, bei der das Endgerät E4 in seinem Speicher 40 zusätzlich einen Erweiterungsdatensatz EDS aufweist, der eine zusätzliche Funktion des Endgeräts E4 beschreibt, die nicht oder nicht vollständig in der in der Gerätedatenbank GDB für das Endgerät E4 abgespeicherten Gerätetypbeschreibung G(E4) definiert ist.

Um auch die im Erweiterungsdatensatz EDS beschriebenen zusätzlichen Funktionen des Endgeräts E4 nutzen zu können, ist die zentrale Steuereinrichtung 20 in der Lage, den Erweiterungsdatensatz EDS aus den Speicher 40 des Endgerätes E4 über das Kommunikationsnetz 30 auszulesen und in der Gerätedatenbank GDB zusätzlich abzuspeichern (vgl. Figur 4). Alternativ kann das Übermitteln des Erweiterungsdatensatzes EDS auch von dem Endgerät E4 ausgelöst werden, indem das Endgerät E4 den Erweiterungsdatensatz EDS selbsttätig an die zentrale Steuereinrichtung 20 übermittelt.

Nach Empfang des Erweiterungsdatensatzes EDS ist es der zentralen Steuereinrichtung 20 möglich, die funktionsbezogene Kommunikation mit dem Endgerät E4 nicht nur auf der Basis der in der Gerätetypbeschreibung G(E4) beschriebenen Gerätefunktionen, sondern zusätzlich auch auf der Basis der in dem Erweiterungsdatensatz EDS definierten Zusatzfunktionen fortzusetzen.

### Bezugszeichenliste

- 10: Anordnung
- 20: Steuereinrichtung
- 30: Kommunikationsnetz
- 40: Speicher
- N: DHCPDISCOVER-Nachricht
- D: Netzwerkkonfigurationsdatensatz
- EDS: Erweiterungsdatensatz
- E1: Endgerät
- E2: Endgerät
- E3: Endgerät
- E4: Endgerät
- GDB: Gerätedatenbank
- G: Gerätetypbeschreibung
- LDB: Laufzeitdatenbank
- T: Typkennung
- TDB: Typendatenbank

## Patentansprüche

1. Verfahren zum Betreiben einer Anordnung (10), die zum Schützen, Steuern und/oder Überwachen einer elektrischen Schalt- oder Energieversorgungsanlage geeignet ist und umfasst:
- eine zentrale Steuereinrichtung (20),
- zumindest ein Endgerät (E1-E4), das zum Messen von Energie, Schalten von Energie und/oder Übertragen von Zustandsdaten einer an das Endgerät angeschlossenen Energiequelle oder eines an das Endgerät angeschlossenen Energieverbrauchers geeignet ist, und
- ein Kommunikationsnetz (30), wobei
- nach dem Anschließen des Endgeräts an das Kommunikationsnetz (30) die zentrale Steuereinrichtung (20) dem Endgerät Netzwerkkonfigurationsdaten (D) zuweist,
**dadurch gekennzeichnet, dass**
- das Endgerät seine Typkennung (T4), die den Gerätetyp des Endgeräts kennzeichnet, unter Verwendung der zugewiesenen Netzwerkkonfigurationsdaten (D) an die zentrale Steuereinrichtung (20) sendet und
- die funktionsbezogene Kommunikation zwischen dem Endgerät und der zentralen Steuereinrichtung (20) unter Heranziehung einer der Typkennung entsprechenden Gerätetypbeschreibung (G(T4)) betrieben wird, so dass die zentrale Steuereinrichtung (20) mit dem Endgerät unter Bezugnahme auf dessen individuelle Gerätefunktionen kommuniziert.

2. Verfahren nach Anspruch 1,
**dadurch gekennzeichnet, dass** die automatische Zuweisung der Netzwerkkonfigurationsdaten (D) durch die zentrale Steuereinrichtung (20) gemäß dem DHCP-Protokoll erfolgt, nachdem die zentrale Steuereinrichtung (20) von dem Endgerät eine Anfrage auf Zuteilung von Netzwerkkonfigurationsdaten (D) erhalten hat.

3. Verfahren nach einem der voranstehenden Ansprüche,
**dadurch gekennzeichnet,dass** das Endgerät seine Typkennung (T4) an alle an das Kommunikationsnetz (30) angeschlossenen Geräte sendet.

4. Verfahren nach einem der voranstehenden Ansprüche,
**dadurch gekennzeichnet, dass** das Endgerät seine Typkennung (T4) unter Verwendung einer Multicast-Adresse sendet.

5. Verfahren nach einem der voranstehenden Ansprüche,
**dadurch gekennzeichnet, dass** das Endgerät seine Typkennung (T4) unter Verwendung des LLDP-Protokolls sendet.

6. Verfahren nach einem der voranstehenden Ansprüche,
**dadurch gekennzeichnet, dass** die zentrale Steuereinrichtung (20) die Gerätetypbeschreibung (G(T4)) aus einer zentralen Typendatenbank (TDB) ausliest.

7. Verfahren nach einem der voranstehenden Ansprüche,
**dadurch gekennzeichnet, dass** die zentrale Steuereinrichtung (20) die Gerätetypbeschreibung (G(T4)) aus einer endgeräteeigenen Typendatenbank und damit aus dem Endgerät ausliest.

8. Verfahren nach einem der voranstehenden Ansprüche,
**dadurch gekennzeichnet, dass** dem Endgerät ein geräteindividueller Erweiterungsdatensatz (EDS) zugeordnet ist.

9. Verfahren nach Anspruch 8,
**dadurch gekennzeichnet, dass** der geräteindividuelle Erweiterungsdatensatz (EDS) von der zentralen Steuereinrichtung (20) aus dem Endgerät ausgelesen wird.

10. Verfahren nach einem der voranstehenden Ansprüche 8-9,
**dadurch gekennzeichnet, dass** der geräteindividuelle Erweiterungsdatensatz (EDS) eine zusätzliche Funktion des Endgeräts beschreibt, die nicht oder nicht vollständig in der Gerätetypbeschreibung (G(E4)) definiert ist.

11. Verfahren nach einem der voranstehenden Ansprüche 8-10,
**dadurch gekennzeichnet, dass** die zentrale Steuereinrichtung (20) eine in dem geräteindividuellen Erweiterungsdatensatz (EDS) beschriebene Funktion des Endgeräts nach dem Auslesen des geräteindividuellen Erweiterungsdatensatzes (EDS) aktiviert.

12. Verfahren nach einem der voranstehenden Ansprüche,
**dadurch gekennzeichnet, dass**
- die Anordnung (10) mit einer die Konfiguration der Anordnung beschreibenden Systemkonfigurationsdatei betrieben wird und
- nach dem Anschließen des Endgeräts an das Kommunikationsnetz (30) eine neue Systemkonfigurationsdatei, die die alte Systemkonfigurationsdatei ersetzt und die Eigenschaften des angeschlossenen Endgeräts berücksichtigt, unter Heranziehung der Gerätetypbeschreibung (G(E4)) des Endgeräts gebildet wird.

13. Anordnung (10) zum Schützen, Steuern, Regeln oder Überwachen einer elektrischen Schalt- oder Energieversorgungsanlage, die umfasst:
- eine zentrale Steuereinrichtung (20) und
- zumindest ein mit der zentralen Steuereinrichtung (20) über ein Kommunikationsnetz (30) verbundenes Endgerät (E1-E4), das zum Messen von Energie, Schalten und/oder Regeln von Energie und/oder Übertragen von Zustandsdaten einer an das Endgerät angeschlossenen Energiequelle oder eines an das Endgerät angeschlossenen Energieverbrauchers geeignet ist, wobei
- die zentrale Steuereinrichtung (20) dazu eingerichtet ist, nach dem Anschließen des Endgeräts an das Kommunikationsnetz (30) dem Endgerät Netzwerkkonfigurationsdaten (D) zuzuweisen,
- **dadurch gekennzeichnet,dass**
- das Endgerät dazu eingerichtet ist, seine Typkennung (T4), die den Gerätetyp des Endgeräts kennzeichnet, unter Verwendung der zugewiesenen Netzwerkkonfigurationsdaten (D) an die zentrale Steuereinrichtung (20) zu senden, und
- die zentrale Steuereinrichtung (20) außerdem dazu eingerichtet ist, die funktionsbezogene Kommunikation mit dem Endgerät unter Heranziehung einer der Typkennung (T4) entsprechenden Gerätetypbeschreibung (G(T4)) zu betreiben, so dass die zentrale Steuereinrichtung (20) mit dem Endgerät unter Bezugnahme auf dessen individuelle Gerätefunktionen kommuniziert.

14. Zentrale Steuereinrichtung (20), die dazu eingerichtet ist, in einer Anordnung nach Anspruch 13 betrieben zu werden,
**dadurch gekennzeichnet, dass** die zentrale Steuereinrichtung (20) dazu eingerichtet ist, nach dem Anschließen eines Endgerätes (E1-E4) an das Kommunikationsnetz (30) dem Endgerät Netzwerkkonfigurationsdaten (D) zuzuweisen, und die zentrale Steuereinrichtung (20) außerdem dazu eingerichtet ist unter Heranziehung der Typkennung (T4) aus einer Typendatenbank (TDB) eine die Funktion des Endgeräts beschreibende Gerätetypbeschreibung (G(T4)) für das Endgerät auszulesen und die funktionsbezogene Kommunikation mit dem Endgerät unter Heranziehung der ausgelesenen Gerätetypbeschreibung (G(T4)) zu beginnen.

15. Endgerät (E1-E4), das dazu eingerichtet ist in einer Anordnung nach Anspruch 13 betrieben zu werden, **dadurch gekennzeichnet, dass** das Endgerät zum Messen von Energie, Schalten von Energie und/oder Übertragen von Zustandsdaten einer an das Endgerät angeschlossenen Energiequelle oder eines an das Endgerät angeschlossenen Energieverbrauchers geeignet ist und dass das Endgerät dazu eingerichtet ist, seine Typkennung (T4) unter Verwendung der zugewiesenen Netzwerkkonfigurationsdaten (D) an die zentrale Steuereinrichtung (20) zu senden.

## Claims

1. Method for operating an arrangement (10) which is suitable for protecting, controlling and/or monitoring an electrical switchgear or energy supply system and comprises:
- a central control unit (20),
- at least one terminal (E1 - E4) which is suitable for measuring energy, switching energy and/or transmitting status data of an energy source connected to the terminal or of an energy user connected to the terminal, and
- a communication network (30), wherein
- after the terminal has been connected to the communication network (30), the central control unit (20) assigns network configuration data (D) to the terminal, **characterized in that**
- the terminal sends its type identifier (T4), which characterizes the equipment type of the terminal, to the central control unit (20) by using the network configuration data (D) assigned, and
- the function-related communication between the terminal and the central control unit (20) is operated out by utilizing an equipment type description (G(T4)) corresponding to the type identifier, such that the central control unit (20) communicates with the terminal by referencing its individual equipment functions.

2. Method according to Claim 1,
**characterized in that**
the automatic assignment of the network configuration data (D) by the central control unit (20) is effected in accordance with the DHCP protocol after the central control unit (20) has received a request for allocation of network configuration data (D) from the terminal.

3. Method according to one of the preceding claims,
**characterized in that**
the terminal sends its type identifier (T4) to all devices connected to the communication network (30).

4. Method according to one of the preceding claims,
**characterized in that**
the terminal sends its type identifier (T4) by using a multicast address.

5. Method according to one of the preceding claims,
**characterized in that**
the terminal sends its type identifier (T4) by using the LLDP protocol.

6. Method according to one of the preceding claims,
**characterized in that**
the central control unit (20) reads out the equipment type description (G(T4)) from a central type database (TDB).

7. Method according to one of the preceding claims,
**characterized in that**
the central control unit (20) reads out the equipment type description (G(T4)) from a type database belonging to the terminal and thus from the terminal.

8. Method according to one of the preceding claims, **characterized in that** an expansion record (EDS) individual to the equipment is allocated to the terminal.

9. Method according to Claim 8,
**characterized in that**
the expansion record (EDS) individual to the equipment is read out of the terminal by the central control unit (20).

10. Method according to one of the preceding Claims 8 - 9,
**characterized in that**
the expansion record (EDS) individual to the equipment describes an additional function of the terminal which is not, or not completely, defined in the equipment type description (G(E4)).

11. Method according to one of the preceding Claims 8 - 10,
**characterized in that**
the central control unit (20) activates a function described in the expansion record (EDS) individual to the equipment, of the terminal after reading out the expansion record (EDS) individual to the equipment.

12. Method according to one of the preceding claims,
**characterized in that**
- the arrangement (10) is operated with a system configuration file describing the configuration of the arrangement, and
- after the terminal has been connected to the communication network (30), a new system configuration file is formed which replaces the old system configuration file and takes into consideration the characteristics of the connected terminal, by utilizing the equipment type description (G(E4)) of the terminal.

13. Arrangement (10) for protecting, controlling, regulating or monitoring an electrical switchgear or energy supply system which comprises:
- a central control unit (20) and
- at least one terminal (E1 - E4), connected to the central control unit (20) via a communication network (30), which is suitable for measuring energy, switching and/or regulating energy and/or transmitting status data of an energy source connected to the terminal or of an energy user connected to the terminal, wherein
- the central control unit (20) is configured to assign network configuration data (D) to the terminal after the terminal has been connected to the communication network (30),
**characterized in that**
- the terminal is configured to send its type identifier (T4), which characterizes the equipment type of the terminal, to the central control unit (20) by using the network configuration data (D) assigned, and
- the central control unit (20) is also configured to operate the function-related communication with the terminal by utilizing an equipment type description (G(T4)) corresponding to the type identifier (T4), such that the central control unit (20) communicates with the terminal by referencing its individual equipment functions.

14. Central control unit (20), which is configured to be operated in an arrangement according to Claim 13,
**characterized in that**
the central control unit (20) is configured to assign network configuration data (D) to the terminal after a terminal (E1-E4) has been connected to the communication network (30), and the central control unit (20) is also configured to read out an equipment type description (G(T4)) for the terminal, describing the operation of the terminal, from a type database (TDB) by utilizing the type identifier (T4) and begin the function-related communication with the terminal by utilizing the equipment type description (G(T4)) read out.

15. Terminal (E1-E4), which is configured to be operated in an arrangement according to Claim 13, **characterized in that**
the terminal is suitable for measuring energy, switching energy and/or transmitting status data of an energy source connected to the terminal or of an energy user connected to the terminal, and **in that** the terminal is configured to send its type identifier (T4) to the central control unit (20) by using the network configuration data (D) assigned.

## Revendications

1. Procédé pour faire fonctionner un agencement (10), propre à protéger, commander et/ou contrôler une installation de distribution électrique ou d'alimentation en énergie électrique et comprenant :
- un dispositif (20) central de commande,
- au moins un appareil (E1 à E4) terminal, propre à mesurer de l'énergie, à distribuer de l'énergie et/ou à transmettre des données d'état d'une source d'énergie raccordée à l'appareil terminal ou d'un consommateur d'énergie raccordé à l'appareil terminal et
- un réseau (30) de communication, dans lequel
- après le raccordement de l'appareil terminal au réseau (30) de communication, le dispositif (20) central de commande affecte des données (D) de configuration de réseau à l'appareil terminal,
**caractérisé en ce que**
- l'appareil terminal envoie, au dispositif (20) central de commande, sa caractéristique (T4) de type, qui caractérise le type de l'appareil terminal, en utilisant les données (D) de configuration de réseau affectées et
- on fait fonctionner la communication rapportée à la fonction, entre l'appareil terminal et le dispositif (20) central de commande, en tirant parti d'une description (G(T4)) de type d'appareil correspondant à la caractérisation de type, de manière à ce que le dispositif (20) central de commande communique avec l'appareil terminal en se référant à ses fonctions individuelles d'appareil.

2. Procédé suivant la revendication 1,
**caractérisé en ce que**
l'affectation automatique des données (D) de configuration de réseau par le dispositif (20) central de commande s'effectue suivant le protocole (DHCP), après que le dispositif (20) central de commande a reçu de l'appareil terminal une demande sur l'affectation de données (D) de configuration de réseau.

3. Procédé suivant l'une des revendications précédentes,
**caractérisé en ce que**
l'appareil terminal envoie sa caractérisation (T4) de type à tous les appareils raccordés au réseau (30) de communication.

4. Procédé suivant l'une des revendications précédentes,
**caractérisé en ce que**
l'appareil terminal envoie sa caractérisation (T4) de type en utilisant une adresse multicast.

5. Procédé suivant l'une des revendications précédentes,
**caractérisé en ce que**
l'appareil terminal envoie sa caractérisation (T4) de type en utilisant le protocole LLDP.

6. Procédé suivant l'une des revendications précédentes,
**caractérisé en ce que**
le dispositif (20) central de commande lie la description (G(T4)) de type d'appareil dans une base (TDB) centrale de données de type.

7. Procédé suivant l'une des revendications précédentes,
**caractérisé en ce que**
le dispositif (20) central de commande lit la description (G(T4)) de type d'appareil dans une base de type de données propre aux appareils terminaux et la lit ainsi dans l'appareil terminal.

8. Procédé suivant l'une des revendications précédentes,
**caractérisé en ce que**
un jeu (EDS) de données d'extension individuel aux appareils est affecté à l'appareil terminal.

9. Procédé suivant la revendication 8,
**caractérisé en ce que**
le jeu (EDS) de données d'extension individuel aux appareils est lu dans l'appareil terminal par le dispositif (20) central de commande.

10. Procédé suivant l'une des revendications précédentes 8 ou 9,
**caractérisé en ce que**
le jeu (EDS) de données d'extension individuel aux appareils décrit une fonction supplémentaire de l'appareil terminal, qui n'est pas définie ou qui n'est pas définie complètement dans la description (G(E4)) de type d'appareil.

11. Procédé suivant l'une des revendications précédentes 8 à 10,
**caractérisé en ce que**
le dispositif (20) central de commande active, après la lecture du jeu (EDS) de données d'extension individuel aux appareils, une fonction de l'appareil terminal décrite dans le jeu (EDS) de données d'extension individuel aux appareils.

12. Procédé suivant l'une des revendications précédentes,
**caractérisé en ce que**
- on fait fonctionner l'agencement (10) avec un fichier de configuration de système décrivant la configuration de l'agencement et
- après le raccordement de l'appareil terminal au réseau (30) de communication, on forme, en tirant parti de la description (G(E4)) de type d'appareil de l'appareil terminal, un nouveau fichier de configuration de système, qui remplace l'ancien fichier de configuration de système et qui prend en compte les propriétés de l'appareil terminal raccordé.

13. Agencement (10) de protection, de commande et de réglage ou de contrôle d'une installation de distribution électrique ou d'alimentation en énergie électrique, qui comprend :
- un dispositif (20) central de commande et
- au moins un appareil (E1 à E4) terminal relié au dispositif (20) central de commande par un réseau (10) de communication et propre à mesurer, distribuer ou régler de l'énergie et/ou à transmettre des données d'état à une source d'énergie raccordée à l'appareil terminal ou à un consommateur d'énergie raccordé à l'appareil terminal, dans lequel
- le dispositif (20) central de commande est conçu pour affecter, après le raccordement de l'appareil terminal au réseau (30) de communication, des données (D) de configuration de réseau à l'appareil terminal,
- **caractérisé en ce que**
- l'appareil terminal est conçu pour envoyer sa caractérisation (T4) de type, qui caractérise le type de l'appareil terminal au dispositif (20) central de commande, en utilisant les données (D) de configuration de réseau affectées et
- le dispositif (20) central de commande est conçu, en outre, pour faire fonctionner la communication se rapportant à la fonction avec l'appareil terminal en tirant parti d'une description (G(T4)) de type d'appareil correspondant à la caractérisation (T4) de type, de sorte que le dispositif (20) central de commande communique avec l'appareil terminal en se référant à ses fonctions d'appareil individuelles.

14. Dispositif (20) central de commande, qui est conçu pour fonctionner dans un agencement suivant la revendication 13,
**caractérisé en ce que**
le dispositif (20) central de commande est conçu pour, après le raccordement d'un appareil (E1 à E4) terminal au réseau (30) de communication, affecter à l'appareil terminal des données (D) de configuration de réseau et le dispositif (30) central de commande est conçu, en outre, pour, en tirant parti de la caractérisation (T4) de type, lire pour l'appareil terminal, une description (G(T4)) de type d'appareil décrivant la fonction de l'appareil terminal et pour faire commencer, en tirant parti de la description (G(T4)) de type d'appareil qui a été lue, la communication rapportée à la fonction avec l'appareil terminal.

15. Appareil (E1 à E4) terminal, qui est conçu pour fonctionner dans un agencement suivant la revendication 13,
**caractérisé en ce que**
l'appareil terminal est propre à mesurer de l'énergie, à distribuer de l'énergie et/ou à transmettre des données d'état d'une source d'énergie raccordée à l'appareil terminal ou d'un consommateur d'énergie raccordé à l'appareil terminal et **en ce que** l'appareil terminal est conçu pour envoyer sa caractérisation (T4) de type au dispositif (20) central de commande, en utilisant les données (D) de configuration de réseau affectées.
